# EUROPÄISCHE PATENTSCHRIFT

(11) **EP 1 534 578 B1**
(45) Veröffentlichungstag und Bekanntmachung des Hinweises auf die Patenterteilung: **25.07.2007**
(21) Anmeldenummer: 03794853.6
(22) Anmeldetag: 08.08.2003
(51) Int. Cl.: B62D 25/08

(54) **KAROSSERIE MIT EINER TRAGSTRUKTUR AUS ZUSAMMENGESETZTEN TEILMODULEN**
BODY COMPRISING A SUPPORT STRUCTURE MADE OF ASSEMBLED PARTIAL MODULES
CARROSSERIE A STRUCTURE PORTANTE COMPOSEE DE MODULES ASSEMBLES

(30) Priorität: 27.08.2002 DE 10239989
(43) Veröffentlichungstag der Anmeldung: 01.06.2005
(73) Patentinhaber: DaimlerChrysler AG, 70327 Stuttgart (DE)
(72) Erfinder: EIPPER, Konrad, 72108 Rottenburg (DE); FUSSNEGGER, Wolfgang, 72074 Tübingen (DE); LANGE, Dieter, 71106 Magstadt (DE); MAYER, Christian, 71263 Weil der Stadt (DE); SPIES, Bernhard, 71063 Sindelfingen (DE); VALDIVIESO, Carlos, 75233 Tiefenbronn (DE); WELLER, Martin, 74427 Fichtenberg (DE)
(86) Internationale Anmeldenummer: PCT/EP2003/008816
(87) Internationale Veröffentlichungsnummer: WO 2004/024539

(56) Entgegenhaltungen:
- EP-A- 0 584 576
- EP-A- 1 215 106
- DE-A- 2 930 036
- DE-A- 10 016 883
- DE-A- 19 833 395
- GB-A- 2 252 090
- US-A- 2 139 750
- US-A- 4 133 549
- US-A- 6 131 284

## Beschreibung

Die Erfindung betrifft eine Karosserie für einen Kraftwagen der im Oberbegriff des Patentanspruchs 1 angegebenen Art.

Eine solche Karosserie mit einer aus großformatigen Teilmodulen zusammengesetzten Tragstruktur ist bereits aus der US -A- 4 133 549 als bekannt zu entnehmen, die alle Merkmale des Oberbegriffs des Anspruchs 1 offenbart, wobei zwei miteinander verbundene Teilmodule jeweils Trägerabschnitte und mit diesen verbundene Wand- und/oder Bodenabschnitte umfassen, wobei Trägerabschnitte des einen Teilmoduls mit zugeordneten Trägerabschnitten des anderen Teilmoduls an Stoßstellen zu einem durchgehenden Träger zusammengesetzt sind. Die Stoßflächen der zusammengesetzten Trägerabschnitte verlaufen dabei schräg zur Erstreckungsrichtung des Trägers.

Durch diesen schrägen Verlauf der Stoßflächen wird eine Verbindung über eine sehr große Fläche im Verhältnis zum Querschnitt des Trägers geschaffen, was bereits eine stabile Anbindung der beiden Teile aneinander gewährleistet. Außerdem ist durch den schrägen Verlauf der Stoßflächen ein Ausgleich von fertigungstechnischen Toleranzen bereits auf einfache Weise möglich, indem durch ein Verschieben der Trägerabschnitte zueinander - in Erstreckungsrichtung des Trägers - eine Einstellung der Trägerabschnitte sowohl in Erstreckungsrichtung des Trägers wie auch in Höhenrichtung in bestimmten Grenzen möglich ist.

Aus der DE 198 33 395 A1 ist ebenfalls bereits eine solche Karosserie als bekannt zu entnehmen, deren Tragstruktur aus im wesentlichen vier großformatigen Teilmodulen zusammengesetzt ist. Beispielsweise ein Vorbaumodul sowie ein Grundmodul dieser Tragstruktur umfassen dabei jeweils Trägerabschnitte und mit diesen verbundene Wand- und/oder Bodenabschnitte.

Beim Zusammensetzten der Teilmodule werden Trägerabschnitte des einen Teilmoduls mit zugeordneten Trägerabschnitten des anderen Teilmoduls an Stoßstellen miteinander verbunden.

Der Erfindung liegt die Aufgabe zugrunde, eine Karosserie der eingangs genannten Art zu schaffen, mit der eine stark belastete Verbindung zwischen Teilmodulen noch stabiler zu realisieren ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei der erfindungsgemäßen Tragstruktur sind die Trägerabschnitte seitlich eines Grundmoduls und eines Vorbaumoduls angeordnet, wodurch sich beim Zusammenfügen seitliche Schweller der Tragstruktur ergeben, die eine sehr große Stabilität der Tragstruktur im Anbindungsbereich der beiden besagten Teilmodule gewährleisten. Als mitumfasst ist es zu betrachten, dass der schräge Verlauf der Stoßflächen auch durch mehrere aneinander anschließende Stufen gebildet sein kann.

Da an den vorderen Enden der seitlichen Längsträgerabschnitte des Grundmoduls nach oben abragende Säulenabschnitte angeordnet sind, welche mit nach oben abragenden Säulenabschnitten der seitlichen Längsträgerabschnitten des Vorbaumoduls zu verbinden sind, ergibt sich insgesamt ein winkeliger Verbund der Säulenabschnitte mit den Längsträgerabschnitten, durch den beispielsweise eine besonders steife Abstützung eines Vorbaumoduls am Grundmodul geschaffen werden kann.

Sind die Stoßflächen der einander zugeordneten Trägerabschnitte ebenen ausgebildet, so ist eine besonders einfache Ausgestaltung der Trägerabschnitte im Bereich der Stoßflächen möglich.

Sind die Trägerabschnitte jeweils aus einem Kastenprofil gebildet, welches durch die jeweilige ebene Stoßfläche stirnseitig verschlossen ist, so ergibt sich beim Zusammenfügen ein besonders fester Anbindungsbereich, wobei der Träger im Querschnitt ein doppeltes, etwa 8-förmiges Kastenprofil aufweisen.

Verlaufen die ebene Stoßfläche und die jeweils zugeordnete Kastenwand in einem spitzen Winkel zueinander und bilden eine Spitze des Trägerabschnittes, so kann die Verbindung der Trägerabschnitt mittels einer am vorderen Ende der Spitze angeordneten Befestigungslasche verbessert werden. Die Befestigungslasche sorgt dabei für eine besonders gute Anbindung der Spitze des einen Trägerabschnitts an dem anderen, wodurch beispielsweise ein sog. Abschälen - also ein Ablösen des einen Trägerabschnitts von der Spitze her - besonders wirksam vermieden ist.

Eine zusätzliche Verbindung und Versteifung der beiden Teilmodule ist geschaffen, wenn neben den Trägerabschnitten auch die Wand- und/oder Bodenabschnitte der Module überlappend miteinander verbunden sind.

Außerdem ergibt sich eine noch stabilere Verbindung von Grundmodul und Vorbaumodul, wenn zusätzlich nach oben abragende Säulenabschnitte der beiden Module miteinander verbunden sind.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig.1: eine perspektivische Explosionsdarstellung auf die aus großformatigen Teilmodulen zusammengesetzte Tragstruktur der erfindungsgemäßen Kraftwagenkarosserie;
- Fig.2: eine weitere perspektivische Explosionsdarstellung auf die aus Teilmodulen zusammengesetzte Tragstruktur, welche mit Außenbeplankungsteilen verkleidet ist;
- Fig.3: eine Perspektivansicht auf ein als Vorbaumodul ausgebildetes Teilmodul der Tragstruktur;
- Fig.4: eine Perspektivansicht auf ein als Grundmodul ausgebildetes Teilmodul der Tragstruktur;
- Fig.5: eine perspektivische Draufsicht auf das Grundmodul und das Vorbaumodul nach dem Zusammenfügen; und in
- Fig.6: eine ausschnittsweise Seitenansicht auf das Grundmodul und das Vorbaumodul nach dem Zusammenfügen.

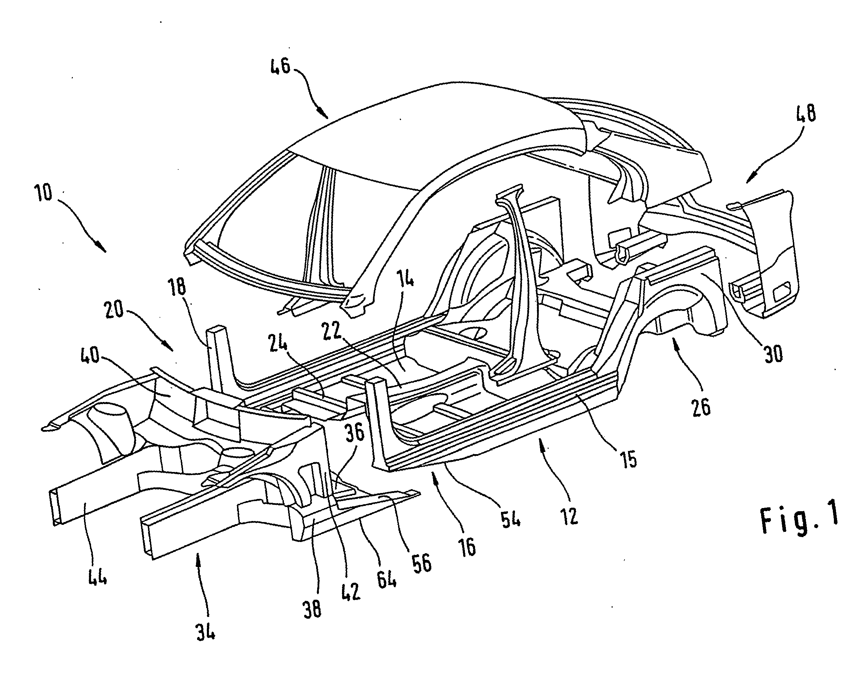

In Fig.1 ist in einer perspektivischen Explosionsdarstellung eine Tragstruktur 10 einer Kraftwagenkarosserie gezeigt, die aus mehreren großformatigen, im weiteren noch näher beschriebenen Teilmodulen zusammengesetzt ist. Die Teilmodule der Tragstruktur 10 sind in dem hier gezeigten Ausführungsbeispiel jeweils aus einer Mehrzahl von zusammengefügten Blechteilen hergestellt; gleichfalls können die Teilmodule jedoch auch in anderen Bauweisen, beispielsweise als sog. Spaceframe, als Kunststoffteile, Metallgussteile, als Bauteile in sog. Sandwich-Bauweise oder dgl. vorgefertigt sein. Insbesondere sind dabei auch Kombinationen unterschiedlicher Bauweisen für die zusammengefügten Teilmodule je nach Anwendung und Belastung denkbar. Die einzelnen Module sind insbesondere über Klebverbindungen, Schweißverbindungen oder dgl. zusammengefügt. Gleichfalls sind andere gängig Verbindungen wie Schraubverbindungen oder dgl. denkbar.

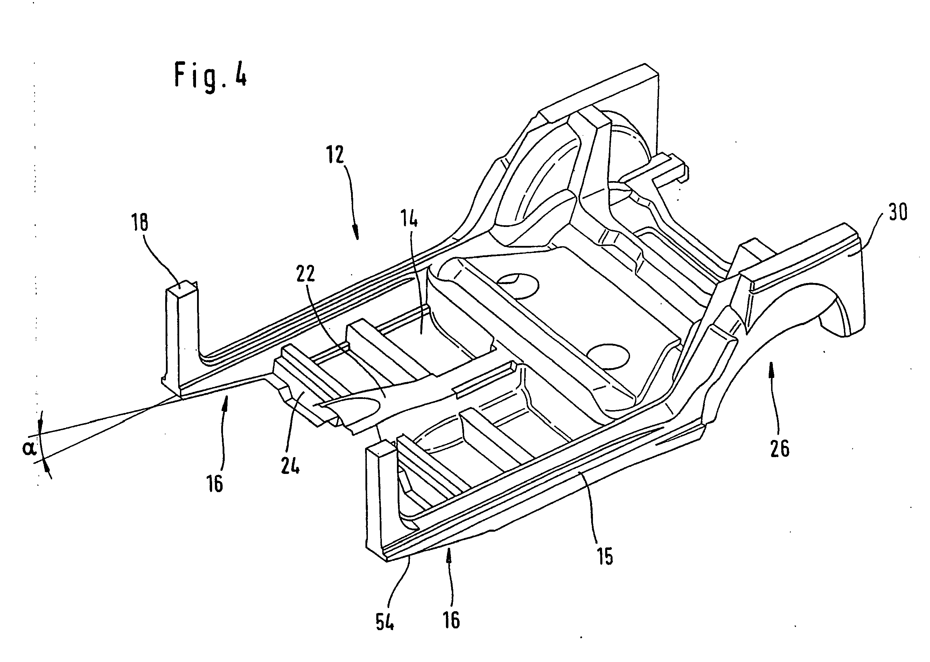

Ein in Zusammenschau von Fig. 1 mit Fig.4 erkennbares Grundmodul 12 der Tragstruktur 10 umfasst im wesentlichen einen Karosserieboden 14, der seitlich von Längsträgern 15 begrenzt ist. Nach vorne reicht das Grundmodul 12 mit Längsträgerabschnitten 16 bis an Säulenabschnitte 18 von Vorderwandsäulen 20, welche von den jeweils zugeordneten vorderen Enden der seitlichen Längsträgerabschnitte 16 nach oben abragen. Der Karosserieboden 14 des Grundmoduls 12 endet in einem erheblichen Abstand hinter dem vorderen Ende des Grundmoduls 12 bzw. hinter den Säulenabschnitten 18 der Vorderwandsäulen 20. Dabei ist der Karosserieboden 14 hier mit einem Mitteltunnel 22 sowie mit von diesem sich nach außen erstreckenden Querträgern 24 versehen, welche mit den Längsträgern 15 fest verbunden sind. Hinten endet das Grundmodul 12 hinter hinteren Radhäusern 26, an deren Innenseite sich die seitlichen Längsträger 15 erstrecken. Oberhalb der hinteren Radhäuser 26 sind Wandbereiche 30 der jeweiligen hinteren Seitenwand angeordnet. Das Grundmodul 12 wird bereits vor dem Zusammenfügen mit den anderen Teilmodulen so weit als möglich ausgestattet.

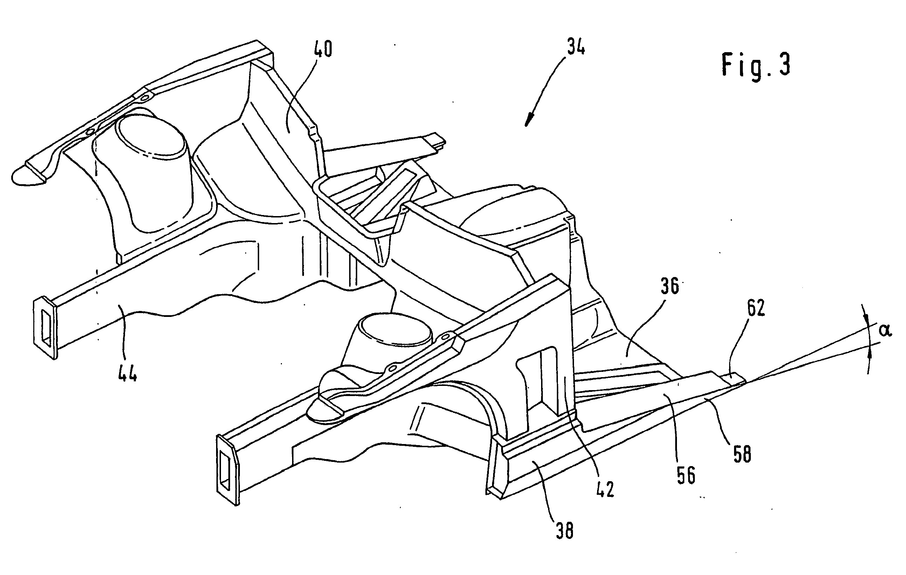

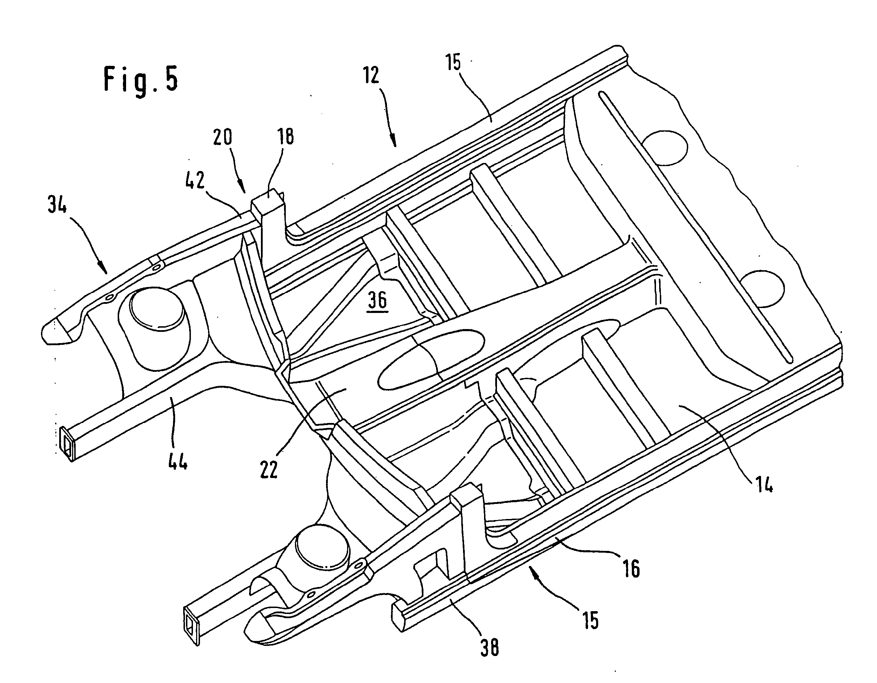

Mit dem Grundmodul 12 ist ein in Zusammenschau mit Fig.3 erkennbares Vorbaumodul 34 verbunden, welches zur vorderen Knautschzone des Kraftwagens gehört und auf im weiteren noch näher beschriebene Weise crashstabil am Grundmodul 12 abgestützt ist. Hierzu umfasst das Vorbaumodul 34 einen vorderen Endbereich 36 des Karosseriebodens 14, welcher sich zwischen seitlichen Längsträgerabschnitten 38 des Vorbaumoduls 34 erstreckt. Wie in Zusammenschau mit den Fig.5 erkennbar, enden der vordere Endbereich 36 des Karosseriebodens 14 und die seitlichen Längsträgerabschnitte 38 nach hinten zumindest annähernd auf einer Höhe. Nach vorne endet der vordere Endbereich 36 des Karosseriebodens 14 an einer vorderen Stirnwand 40 der Fahrgastzelle, welche sich vom vorderen Endbereich 36 des Karosseriebodens 14 bis etwa auf Höhe der Bordwandkante der Tragstruktur 10 erstreckt. Seitlich wird die Stirnwand 40 von Säulenabschnitten 42 der Vorderwandsäulen 20 begrenzt, welche von den seitlichen Längsträgerabschnitten 38 des Vorbaumoduls 34 nach oben abragen. Am vorderen Ende des Vorbaumoduls 34 sind vordere Längsträger 44 erkennbar. Wie das Grundmodul 12 wird auch das Vorbaumodul 34 bereits vor dem Zusammenfügen mit den anderen Teilmodulen, Aggregaten und Verkleidungsteilen so weit als möglich ausgestattet.

Auf das Grundmodul 12 und das Vorbaumodul 34 ist ein Dachmodul 46 aufsetzbar. Hinten schließt sich an das Grundmodul 12 ein Heckmodul 48 an, welches bei zusammengesetzter Tragstruktur 10 zusammen mit dem hinteren Endbereich des Grundmoduls 12 zur hinteren Knautschzone des Kraftwagens gehört.

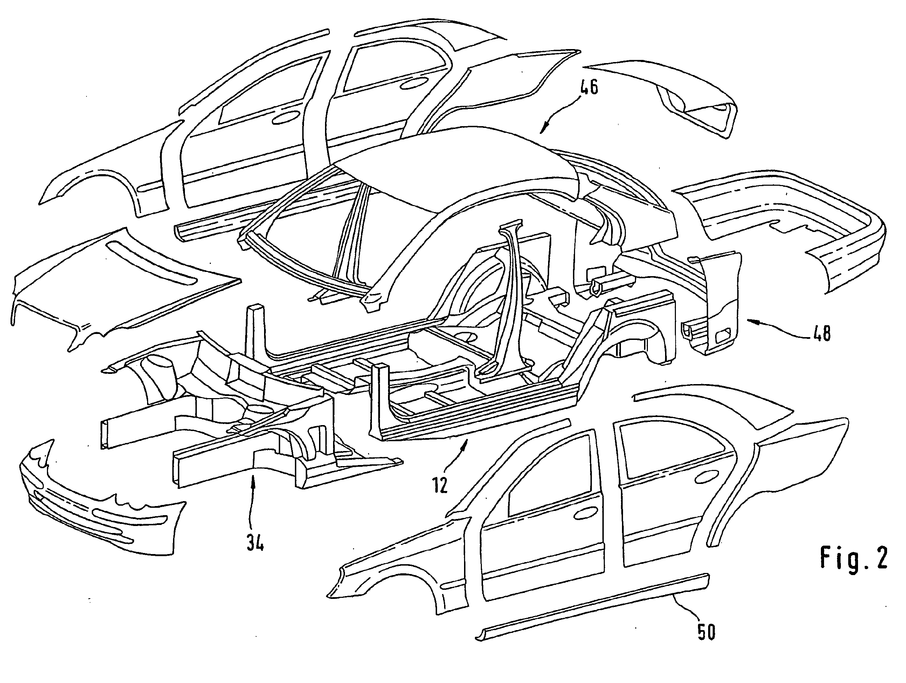

Wie in Fig.2 dargestellt, ist die aus den Teilmodulen 12,34,46 und 48 zusammengesetzte Tragstruktur 10 mit Außenbeplankungsteilen aus Kunststoff, Blech oder dgl. verkleidet. So sind insbesondere vordere Kotflügelverkleidungen so ausgebildet, dass die Fügestelle zwischen den nach oben ragenden Säulenabschnitten 18 und 42 des Grundmoduls 12 und des Vorbaumoduls 34 abgedeckt und von außen nicht sichtbar ist. Seitliche Schwellerverkleidungen 50 sind so ausgebildet, dass die Fügestelle zwischen den jeweiligen Längsträgerabschnitten 16 des Grundmoduls 12 und den Längsträgerabschnitten 38 des Vorbaumoduls 34 von außen nicht sichtbar kaschiert ist.

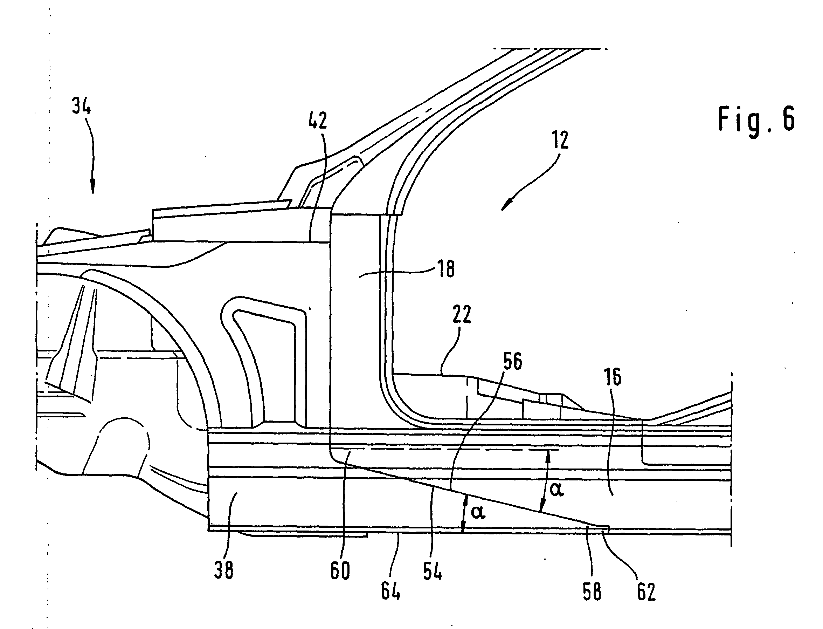

In den Figuren 5 und 6 ist in perspektivischer Draufsicht bzw. in ausschnittsweiser Seitenansicht das Grundmodul 12 und das Vorbaumodul 34 nach dem Zusammenfügen dargestellt. Es ist erkennbar, dass sich der zum Vorbaumodul 34 gehörende vordere Endbereich 36 des Karosseriebodens 14 zwischen den seitlichen Längsträgerabschnitten 16 über einen erheblichen Längenbereich des Grundmoduls 12 nach hinten erstreckt. Weiter ist erkennbar, dass die einander zugeordneten seitlichen Längsträgerabschnitte 16,38 des Vorbaumoduls 34 und des Grundmoduls 12 an schräg zur Erstreckungsrichtung des Trägers verlaufenden Stoßflächen 54,56 der Trägerabschnitte 16,38 zu dem durchgehenden Schweller 15 zusammengesetzt sind. Die seitlichen Längsträgerabschnitte 16,38 des Vorbaumoduls 34 und des Grundmoduls 12 sind hier als Kastenprofil aus zwei zusammengesetzten Blechschalen gestaltet, wobei die Längsträgerabschnitte 16,38 an den einander zugewandten Stirnseiten jeweils durch die zugehörige ebene Stoßfläche 54,56 stirnseitig verschlossen sind. Die Stoßflächen 54,56 bestehen hier aus durchgehenden ebenen Blechabschnitten, welche umlaufend - beispielsweise über eine Schweißverbindung - mit dem Kastenprofil der Längsträgerabschnitte 16,38 verbunden ist. Natürlich wäre es auch denkbar, anstelle der durchgehenden, den Querschnitt des Kastenprofils vollständig verschließenden Blechabschnitte nur Flansche zu verwenden, welche beispielsweise an der Stirnseite des Kastenprofils umlaufend angeordnet sein können. Auch wäre es denkbar, dass der schräge Verlauf der Stoßflächen 54,56 durch mehrere aneinander anschließende Stufen gebildet sein kann. Die ebenen Stoßflächen 54,56 schließen mit der jeweils zugeordneten Kastenwand des entsprechenden Längsträgerabschnittes 16,38 einen spitzen Winkel α ein, so dass durch die ebene Stoßfläche 54,56 und die jeweils zugeordnete Kastenwand eine Spitze des entsprechenden Längsträgerabschnittes 16,38 gebildet ist. Am vorderen Ende der jeweiligen Spitzen 58 der Längsträgerabschnitte 38 des Vorbaumoduls 34 ist jeweils eine Befestigungslasche 62 vorgesehen, über welche die Längsträgerabschnitte 38 des Vorbaumoduls 34 zusätzlich mit den zugehörigen Längsträgerabschnitten 16 des Grundmoduls 34 verbunden sind. Die Befestigungslaschen 62 sind dabei durch Verlängerungen der unteren Kastenwand 64 der Längsträgerabschnitte 38 gebildet und sorgen für eine besonders gute Anbindung der Spitze 58, wodurch beispielsweise ein Abschälen - also ein Ablösen des Trägerabschnitts 38 von der Spitze 58 her besonders wirksam vermieden ist.

Wie in den Figuren 5 und 6 gezeigt, erstrecken sich die Stoßflächen 54,56 über die zumindest annähernd gesamte Überdeckungslänge der einander zugeordneten Längsträgerabschnitte 16,38. Dabei entspricht die Länge der Stoßflächen 54,56 etwa der Länge des angrenzenden vorderen Endbereichs 36 des Karosseriebodens 14.

Nach dem Zusammenfügen der einander jeweils zugeordneten Längsträgerabschnitte 16,38 entstehen seitliche Längsträger mit im Querschnitt doppeltem, etwa 8-förmigen Kastenprofil. Die Stoßflächen 54,56 sind hier über eine Klebeverbindung oder dgl. Fügeverbindung und ggf. zusätzlich über eine mechanische Verbindung wie eine Schraubverbindung aneinander festgelegt.

Die nach oben abragenden Säulenabschnitte 18,42 des Grundmoduls 12 und des Vorbaumoduls 34 umfassen jeweils aneinander angepasste Fügeflächen, über welche die Säulenabschnitte 18,42 zu der Vorderwandsäule 20 verbunden sind. Die nach oben abragenden Säulenabschnitte 18,42 umfassen jeweils ein im Querschnitt geschlossenes Kastenprofil, so dass nach dem Zusammenfügen der jeweils zugeordneten Säulenabschnitte 18,42 besonders steife Türsäulen 20 mit im Querschnitt doppeltem, etwa 8-förmigen Kastenprofil geschaffen sind. Durch den winkeligen Verbund der Säulenabschnitte 18 mit den Längsträgerabschnitten 16 des Grundmoduls 12 bzw. den winkeligen Verbund der Säulenabschnitte 42 mit den Längsträgerabschnitten 38 des Vorbaumoduls 34 wird eine besonders steife Abstützung des Vorbaumoduls 34 am Grundmodul 12 geschaffen. In Fahrzeugquerrichtung wird die Lage des Grundmoduls 12 und des Vorbaumoduls 34 nicht durch die besagten Fügeflächen 54,56 bestimmt, sondern beispielsweise durch Anlageflächen des Grundmoduls 12 und des Vorbaumoduls 34 im Bereich des Mitteltunnels 22. Mit anderen Worten sind die Teilmodule 12,34 in Fahrzeugquerrichtung durch Verschieben entlang der Stoßflächen 54,56 gegeneinander auszurichten. Der zum Vorbaumodul gehörende vordere Endbereich 36 des Karosseriebodens 14 ist mit dem zum Grundmodul 12 gehörenden Bereich des Karosseriebodens 14 überlappend verbunden, wie insbesondere aus Fig.5 ersichtlich. Der Mitteltunnel 22 ist dabei sowohl in den vorderen Endbereich 36 wie auch in den Karosserieboden 14 eingeformt und mit Fügeflächen versehen.

Im Rahmen der Erfindung als mitumfasst ist es zu betrachten, dass die Stoßflächen 54,56 auch gekrümmt ausgebildet sein können.

## Patentansprüche

1. Karosserie für einen Kraftwagen, deren Tragstruktur (10) aus großformatigen Teilmodulen (12,34,46,48) zusammengesetzt ist, wobei zwei miteinander verbundene Teilmodule (12,34) jeweils Trägerabschnitte (16,38) und mit diesen verbundene Wand- und/oder Bodenabschnitte (14,36) umfassen, wobei Trägerabschnitte (16) des einen Teilmoduls (12) mit zugeordneten Trägerabschnitten (38) des anderen Teilmoduls (34) an Stoßstellen (54,56) miteinander verbunden und zu einem durchgehenden Träger (15) zusammengesetzt sind, und wobei Stoßflächen (54,56) der zusammengesetzten Trägerabschnitte (16,38) schräg zur Erstreckungsrichtung des Trägers (15) verlaufen, wobei die Trägerabschnitte der Teilmodule (12,34,46,48) seitliche Längsträgerabschnitte (16,38) sind, **dadurch gekennzeichnet ,**
• **dass** die seitlichen Längsträger (15) einen Karosserieboden (14) begrenzen, wobei ein vorderer Endbereich (36) des Karosseriebodens (14) zu einem Vorbaumodul (34) gehört und sich zwischen den seitlichen Längsträgerabschnitten (16) über einen erheblichen Längenbereich eines Grundmoduls (12) nach hinten erstreckt,
• wobei an den vorderen Enden der seitlichen Längsträgerabschnitte (16) des Grundmoduls (12) nach oben abragende Säulenabschnitte (18) angeordnet sind, welche mit nach oben abragenden Säulenabschnitten (42) der seitlichen Längsträgerabschnitten (38) des Vorbaumoduls (34) verbunden sind.

2. Karosserie nach Anspruch 1,
**dadurch gekennzeichnet ,**
**dass** die einander zugeordneten Trägerabschnitte (16,38) der beiden Teilmodule (12,34) jeweils eine ebene Stoßfläche (54,56) aufweisen.

3. Karosserie nach Anspruch 2,
**dadurch gekennzeichnet,**
**dass** die Trägerabschnitte (16,38) der beiden Teilmodule (12,34) jeweils ein Kastenprofil aufweisen, welches durch die ebene Stoßfläche (54,56) stirnseitig verschlossen ist.

4. Karosserie nach Anspruch 2 oder 3,
**dadurch gekennzeichnet,**
**dass** die ebene Stoßfläche (54,56) mit der jeweils zugeordneten Kastenwand des Trägerabschnittes (16,38) einen spitzen Winkel (α) einschließt.

5. Karosserie nach Anspruch 4,
**dadurch gekennzeichnet,**
**dass** durch die ebene Stoßfläche (54,56) und die jeweils zugeordnete Kastenwand eine Spitze (58) des Trägerabschnittes (38) gebildet ist, wobei am vorderen Ende der Spitze (58) eine Befestigungslasche (62) vorgesehen ist, über welche die einander zugeordneten Trägerabschnitte (16,38) zusätzlich verbunden sind.

6. Karosserie nach Anspruch 6,
**dadurch gekennzeichnet ,**
**dass** der zum Vorbaumodul (34) gehörende vordere Endbereich (36) des Karosseriebodens (14) mit dem zum Grundmodul (12) gehörenden Bereich des Karosseriebodens (14) überlappend verbunden ist.

7. Karosserie nach Anspruch 1,
**dadurch gekennzeichnet ,**
**dass** die nach oben abragenden Säulenabschnitte (18,42) des Vorbaumoduls (34) und des Grundmoduls (12) zu den Vorderwandsäulen (20) verbindbar sind.

## Claims

1. Body for a motor vehicle, the support structure (10) of which is assembled from large-size partial modules (12, 34, 46, 48), two partial modules (12, 34) which are connected to each other in each case comprising support sections (16, 38) and wall and/or floor sections (14, 36) connected thereto, support sections (16) of the one partial module (12) being connected to associated support sections (38) of the other partial module (34) at abutment points (54, 56) and being assembled to form a continuous support (15), and abutting surfaces (54, 56) of the assembled support sections (16, 38) running obliquely with respect to the direction of extent of the support (15), the support sections of the partial modules (12, 34, 46, 48) being lateral longitudinal member sections (16, 38), **characterized**
• **in that** the lateral longitudinal members (15) bound a body floor (14), a front end region (36) of the body floor (14) belonging to a front end module (34) and extending rearwards over a considerable length region of a basic module (12) between the lateral longitudinal member sections (16),
• upwardly protruding column sections (18) being arranged at the front ends of the lateral longitudinal member sections (16) of the basic module (12), which column sections are connected to upwardly protruding column sections (42) of the lateral longitudinal member sections (38) of the front end module (34).

2. Body according to Claim 1, **characterized in that** the support sections (16, 38) of the two partial modules (12, 34), which support sections are assigned to one another, each have a planar abutting surface (54, 56).

3. Body according to Claim 2, **characterized in that** the support sections (16, 38) of the two partial modules (12, 34) each have a box profile which is closed on the end side by the planar abutting surface (54, 56).

4. Body according to Claim 2 or 3, **characterized in that** the planar abutting surface (54, 56) encloses an acute angle (α) with the respectively assigned box wall of the support section (16, 38).

5. Body according to Claim 4, **characterized in that** a point (58) of the support section (38) is formed by the planar abutting surface (54, 56) and the respectively assigned box wall, a fastening tab (62) being provided at the front end of the point (58), via which tab the support sections (16, 38) which are assigned to one another are additionally connected.

6. Body according to Claim 1, **characterized in that that** end region (36) of the body floor (14) which belongs to the front end module (34) is connected in an overlapping manner to that region of the body floor (14) which belongs to the basic module (12).

7. Body according to Claim 1, **characterized in that** the upwardly protruding column sections (18, 42) of the front end module (34) and of the basic module (12) can be connected to form the front wall columns (20).

## Revendications

1. Carrosserie pour une voiture, dont la structure portante (10) est constituée de modules partiels (12, 34, 46, 48) de grand format, deux modules partiels (12, 34) reliés entre eux comprenant chacun des parties de support (16, 38) et des parties de parois et/ou de plancher (14, 36) reliées aux premières parties, des parties de support (16) d'un module partiel (12) étant reliées entre elles avec des parties de support (38) attribuées de l'autre module partiel (34) en des points de jonction (54, 56) et étant assemblées pour former un support (15) continu, et des surfaces de jonction (54, 56) des parties de support (16, 38) assemblées étant agencées en biais par rapport à la direction d'extension du support (15), les parties de support des modules partiels (12, 34, 46, 48) étant des parties de longeron latérales (16, 38), **caractérisée en ce que**
- les longerons latéraux (15) délimitent un plancher de carrosserie (14), une zone d'extrémité (36) avant du plancher de carrosserie (14) appartenant à un module de partie avant (34) et s'étendant entre les parties de longeron (16) latérales sur une zone de longueur importante d'un module de base (12) vers l'arrière
- des parties de colonne (18) dépassant vers le haut étant disposées sur les extrémités avant des parties de longeron (16) latérales du module de base (12), qui sont reliées à des parties de colonne (42) dépassant vers le haut des parties de longeron (38) latérales du module de partie avant (34).

2. Carrosserie selon la revendication 1,
**caractérisée en ce que**
les parties de support (16, 38) attribuées les unes aux autres des deux modules partiels (12, 34) présentent chacune une surface de jonction (54, 56) plane.

3. Carrosserie selon la revendication 2,
**caractérisée en ce que**
les parties de support (16, 38) des deux modules partiels (12, 34) présentent chacune un profil de caisse qui est fermé côté avant par la surface de jonction (54, 56) plane.

4. Carrosserie selon la revendication 2 ou 3,
**caractérisée en ce que**
la surface de jonction (54, 56) plane forme un angle (α) aigu avec la paroi de caisse respectivement attribuée de la partie de support (16, 38).

5. Carrosserie selon la revendication 4,
**caractérisée en ce qu'**
une pointe (58) de la partie de support (38) est formée par la surface de jonction (54, 56) plane et la paroi de caisse respectivement attribuée, une patte de fixation (62) étant prévue sur l'extrémité avant de la pointe (58), patte par laquelle les parties de support (16, 38) réciproquement attribuées sont reliées en supplément.

6. Carrosserie selon la revendication 6,
**caractérisée en ce que**
la zone d'extrémité (36) avant, appartenant au module de partie avant (34), du plancher de carrosserie (14) est reliée par chevauchement à la zone, appartenant au module de base (12), du plancher de carrosserie (14).

7. Carrosserie selon la revendication 1,
**caractérisée en ce que**
les parties de colonne (18, 42) dépassant vers le haut, du module de partie avant (34) et du module de base (12) peuvent être reliées pour former les colonnes de partie avant (20).
